# EUROPÄISCHE PATENTSCHRIFT

(11) **EP 0 868 229 B1**
(45) Veröffentlichungstag und Bekanntmachung des Hinweises auf die Patenterteilung: **29.03.2000**
(21) Anmeldenummer: 96942294.8
(22) Anmeldetag: 02.12.1996
(51) Int. Cl.: B09B 5/00, B23P 19/04

(54) **TRENNVORRICHTUNG FÜR EINEN GEGENSTAND**
OBJECT-SEPARATING DEVICE
DISPOSITIF POUR LA SEPARATION D'UN OBJET

(30) Priorität: 04.12.1995 DE 29519170 U
(43) Veröffentlichungstag der Anmeldung: 07.10.1998
(73) Patentinhaber: EMTEC Magnetics GmbH, 67059 Ludwigshafen (DE)
(72) Erfinder: SCHLATTER, Manfred, 79111 Freiburg (DE); MÜLLER, Norbert, 67159 Friedelsheim (DE); HOEFER, Gerhardt, 96450 Coburg (DE)
(86) Internationale Anmeldenummer: EP9605328
(87) Internationale Veröffentlichungsnummer: WO9720646

(56) Entgegenhaltungen:
- EP-A- 0 469 676
- EP-A- 0 639 406
- FR-A- 2 534 705

## Beschreibung

Die Erfindung betrifft eine Trennvorrichtung für wenigstens einen, in einem einseitig offenen Gehäuseteil teilweise über einer Gehäuseteilöffnung befindlichen Gegenstand, insbesondere eine Bandspule in einem Gehäuseteil, umfassend eine Greifvorrichtung für den Gegenstand.

Für das Wiederaufarbeiten von Kassetten jeder Art oder das Recycling von Kassetten ist es notwendig, wenigstens eine Band- oder Filmspule von wenigstens einem Gehäuseteil zu trennen, um entweder eine neue Band- oder Filmspule einzusetzen oder das Kunststoffmaterial des Gehäuses von dem des Band- oder Filmmaterials zu trennen, um ein getrenntes Recycling durchzuführen.

EP-A-639 406 beschreibt ein Verfahren und Vorrichtungen zum Aufbereiten von Magnetbandkassetten. Hieraus ist eine Trennvorrichtung für wenigstens eine Bandspule bekannt, die diese von einem einseitig offenen Gehäuseteil trennt und außerdem mittels einer Detektorvorrichtung, verbunden mit einer Bewegungssteuereinrichtung, der Weitertransport der Gegenstände bestimmt wird.

Aus FR-A-2 534 705 ist eine Vorrichtung zum Öffnen einer Filmpatrone und zur Enthahme des Films aus der Patrone bekannt, wobei die Filmpatrone an der Außenseite durch einen Halter fixiert und der Film mitsamt der Spule mittels eines Kolbens aus der Filmpatrone herausgedrückt wird.

Aus der EP-OS 554 785 ist es bekannt, zur Wiederverwertung verbrauchter Magnetbandkassetten das Kassettengehäuse zu öffnen und die Bandspulen zu entnehmen, indem das Kassettengehäuse um die Bandspulen herum ausgestanzt oder ausgefräst und die Wickelkerne ausgestanzt werden. Dabei erfolgt keine Trennung von Gehäusematerial, Spulenmaterial und Bandmaterial, so daß eine Material-Separierung für ein materialgerechtes Recycling noch anschließend erfolgen muß.

Aus der DE-OS 4 137 568 ist es auch bekannt, bei Farbbandkassetten nach deren Zerstörung das im Kassettenunterteil verbliebene Farbband mittels Luftstromes abzusaugen und einer getrennten Verwertung zuzuführen. Eine solche Bandabsaugung ist für Magnetbandkassetten, wo mehrere hundert Meter Band aufgewickelt sind, technisch aus Zeitgründen und bei großen Bandmengen nicht sinnvoll.

Der vorliegenden Erfindung liegt daher die Aufgabe zugrunde, eine Trennvorrichtung für Gegenstände aus Gehäuseteilen, insbesondere Band- oder Filmspulen, bereitzustellen, bei der eine wirtschaftliche Trennung der Materialien des Gehäuseteils und der Bandspulen erfolgt.

Erfindungsgemäß wird diese Aufgabe gelöst mit einer Trennvorrichtung der eingangs beschriebenen Art, wenn die Trennvorrichtung eine Ausstoßvorrichtung enthält, die durch die Gehäuseöffnung an den Gegenstand herantritt, denselben in den Bereich der Greifvorrichtung bewegt, die den Gegenstand vom Gehäuseteil trennt.

Damit wird eine schnelle Trennung von Spulen und Gehäuseteil erreicht und mittels der Greifvorrichtung ist ein gezielter Transport der Spulen erreichbar.

Praktisch ist an der Greifvorrichtung in Richtung der Ausstoßbewegung der Ausstoßvorrichtung hinter dem Gegenstand eins Abdekkung angeordnet. Dadurch wird ein sicherer Greifvorgang sichergestellt und die Bandspule kann nicht fortgestoßen werden.

Zweckmäßig ist die Trennvorrichtung mit einer Detektorvorrichtung für den Zustand des Gegenstands versehen. Dadurch kann z.B. bei Bandspulen gezielt und frühzeitig festgestellt werden, ob die Bandspule leer ist oder noch Band enthält, und auch, welcher Art das Band oder der Film ist. Dadurch ist ein Separieren der Spulen mit und ohne Band möglich.

Es ist vorteilhaft, als Detektorvorrichtung eine Tastvorrichtung, insbesondere eine Lichttastvorrichtung, zu verwenden.

Praktisch kann diese Tastvorrichtung direkt an der Greifvorrichtung vorgesehen sein. Dadurch wird die räumliche Zuordnung einfach erreicht.

Im weiteren kann die Greifvorrichtung mit einer Bewegungssteuerungseinrichtung in Verbindung stehen und die Tastsignale von der Tastvorrichtung können der Bewegungssteuerungseinrichtung zugeführt werden und den Weitertransport des Gegenstands bestimmen.

Dadurch lassen sich über eine Separiereinrichtung verschiedenartige Gegenstände voneinander trennen.

Ausführungsbeispiele der Erfindung sind nachfolgend beschrieben und in der Zeichnung dargestellt.

Die Zeichnung zeigt in
- Figur 1: eine Trennvorrichtung nach der Erfindung in Draufsicht
- Figur 2: die Trennvorrichtung aus Figur 1 in Seitenansicht gemäß Pfeilen A-A'.

Das Gehäuseunterteil 5 einer Videokassette wird entlang eines Transportweges (Stangen 6) in Richtung der Pfeile T gefördert. Das Unterteil 5 enthält zwei nebeneinanderliegende Bandspulen, die linke Spule 7 mit Magnetband, die rechte 8 ohne Magnetband, höchstens mit transparentem Vorspannband.

Wenn die Spulen 7 und 8 an der Trennvorrichtung ankommen, ist folgender Momentanzustand gegeben:

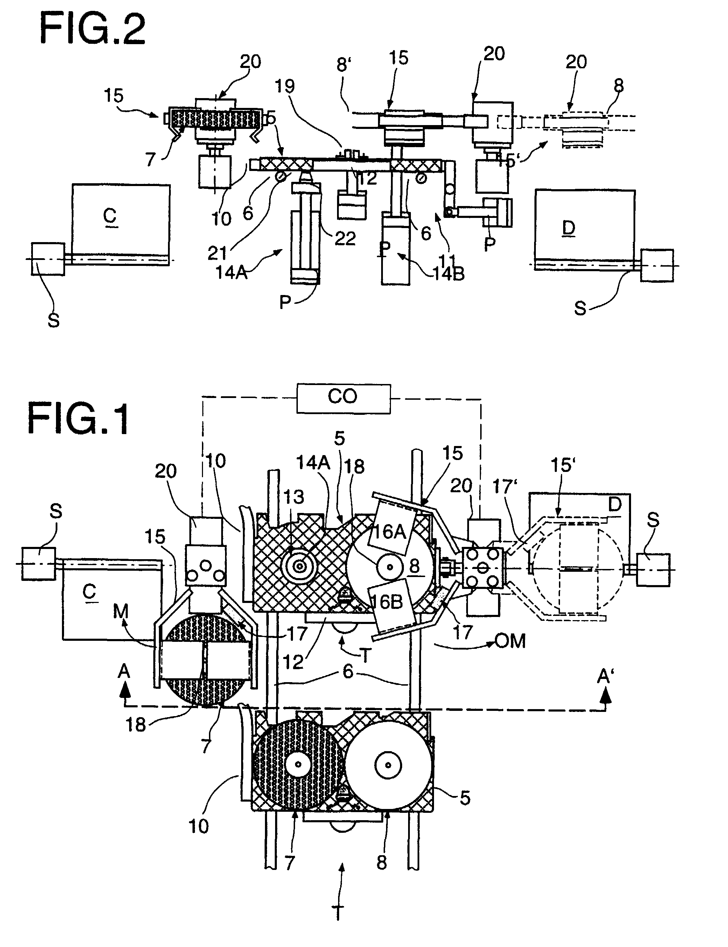

Das Unterteil 5 ist eingespannt durch Anschlag 10 und Spanneinrichtungen 11 (und eventuell noch 12) in definierter Lage, in der sich die Unterteilöffnungen 13 zentrisch über den Ausstoßvorrichtungen 14 (in Figur 2 14A im Ruhezustand, 14B im Arbeitszustand) befinden.

Die Greifer 15 befinden sich in der Lage des rechten Greifers über jeder Spule 7 und 8, wobei die oberen Abdeckungen als Bleche 16A und B ausgebildet sind.

Werden die Kolben der Ausstoßvorrichtungen 14 ausgelöst, so wird jede Spule 7, 8 in den Greifer 15 hineingeschoben, und die Backen derselben schließen sich seitlich um und über der Spule 7, 8, vgl. den Geifer 15' in der Schließstellung.

Die Spulen 7 und 8 befinden sich, wie in Figur 2 erkennbar ist, (Spule 8') oberhalb des Unterteils 5 im Greifer 15.

In dieser Stellung tritt die Tasteinrichtung 17 in Aktion, die vorteilhaft ein Reflexions-Lichttaster an jedem Greifer 15 ist (Fabrikat WT5-P112 der Firma Sick GmbH, Waldkirch), der jeweils radial auf den Kern 18 der nächstliegenden Spule 8 gerichtet ist.

Ist kein Magnetband oder nur das durchsichtige Vorspannband vorhanden, erscheint der Kern 18 hell (da die Spulenkerne in Videokassetten überwiegend als "hell" erkannt werden, da sie weiß oder transparent sind). Ist auch nur eine Lage Magnetband vorhanden, erscheint der Kern 18 dunkel. Der Lichttaster erhält also Reflexionssignale verschiedener Intensität und erzeugt entsprechende unterschiedliche Tastsignale, die zur weiteren Transportsteuerung der Spulen 7, 8 verwendbar sind.

Außer dieser Magnetband-Ja- oder Nein-Entscheidung ist es mit einem geeignet empfindlichen Lichttaster auch möglich z.B. Bandfarben zu unterscheiden wie z.B. Eisenoxidband (braun), Chromdioxidband (schwarz), Metallschichtband (metallisch) und danach durch charakteristische Tastsignale entsprechende Transport- und Separierungsschritte zu steuern.

Im dargestellten Beispiel wird die hier detektierte Spule 7 mit Magnetband, nach dem Greifen und Zurückziehen der Ausstoßvorrichtungen 14A und 14B, über eine entsprechende 90°-Drehung des Greifers 15 und eine weitere 90°-Drehung in Richtung des Pfeils M so gesteuert, daß die Spule 7 nach Öffnen des Greifers 15 in den Behälter C fällt, der z.B. über einen Schwenkmechanismus S abdeckbar ist oder der auch ein Förderband zu einer Magnetband-Spulen-Sammelstelle sein kann, das mittels des Schwenkmechanismus S auch auf ein anderes Förderband umschaltbar sein kann.

Im Beispiel ist die rechte Spule 8 ohne Band und der Greifer 15 wurde bereits über das Tastsignal des Lichttasters 17 entlang des Pfeils OM in die Lage 15' geschwenkt, so daß ein Behälter D oder Förderband für Spulen ohne Magnetband zur Aufnahme bereit ist. Bei umgekehrtem Vorhandensein des Bandes auf der Spule 8 kann die Spule 7 in den Behälter D für Leerspulen und die volle Spule 8 in den Behälter C dafür gefördert werden. Gegebenenfalls können auch zwei leere oder zwei volle Spulen (wenn vorhanden) in die jeweiligen Behälter C oder D gefördert werden.

Nach Entfernung und Separierung der Spulen 7 und 8 wird das Unterteil 5 weitertransportiert und die noch darauf befindlichen Kleinteile, z.B. die dargestellte Bremseinrichtung 19, entfernt. Danach kann das Unterteil selbst über entsprechend geeignete Greifeinrichtungen oder Ähnliches selbst einem Sammelbehälter zugeführt werden. (Nicht dargestellt, aber die oben für die Spulen beschriebenen Vorrichtungen sind dafür auch entsprechend verwendbar.)

Die oben beschriebenen Einzelvorrichtungen können folgende geeignete Antriebs- bzw. Mechanikeinrichtungen enthalten:

Die Ausstoßvorrichtungen 14 werden über Pneumatik- oder Hydraulik-Zylinder-Einheiten P bewegt.

Die Greifer 15 enthalten eine Bewegungsmechanik und Antriebseinheit, mit 20 bezeichnet. Es ist auch ein Industrieroboter benutzbar, der im wesentlichen aus einem Manipulator (dem eigentlichen Roboter) und einer Steuereinheit besteht, wobei letztere durch einen Personalcomputer mit dem Bewegungsprogramm versorgt werden kann.

Die Positionier- und Spanneinrichtung 11 wird ebenfalls über eine Pneumatik- oder Hydraulik-Zylindereinheit P bewegt. Die Schwenkmechanismen S können einen Schwenkantrieb enthalten.

Alle Einrichtungen können bezüglich der räumlichen und zeitlichen Abfolge des Spulentrennvorgangs durch eine in Figur 2 angedeutete, mit den Bewegungs- und Antriebseinheiten W der Greifer 15 verbundene, zentrale oder auch gekoppelte individuelle Steuereinrichtung CO gesteuert werden. Diese Steuereinrichtung CO kann zweckmäßig einen Mikroprozessor enthalten, der das Bewegungsprogramm der Steuereinrichtung bestimmt.

Es sind auch folgende Abwandlungen der oben beschriebenen Ausführung der Trennvorrichtung möglich.

### Greifer 15

Es ist prinzipiell möglich, einen 3-Finger-Außengreifer für den oberen Spulenteller, wenn vorhanden, oder einen Innengreifer für flanschlose Wickelkerne zu verwenden, zum Ergreifen und/oder Herausheben der Spulen.

Wenn die Spulen obenliegende Flansche ohne Durchbrüche aufweisen, kann auch eine Saug-Greifeinrichtung zum Ergreifen und/oder Herausheben der Spulen benutzt werden.

Parallel zu den Abdeckblechen 16A, B können die Greifer 15 untenliegende Ansätze zum Untergreifen des unteren Spulenflansches, wenn vorhanden, aufweisen, so daß die Backen teilweise U-Form besitzen.

### Ausstoßvorrichtungen 14

Die Kolben sind zweckmäßig mit einem Dorn 21, der in die Mittelöffnung der Spulen 7, 8 eingreift und einem darunter angeordneten Halteteller 22 ausgebildet.

### Tastvorrichtung 17

Es ist prinzipiell möglich, statt eines Normal-Lichttasters einen Infrarot (IR)-Lichttaster zu verwenden.

Die oben beschriebene Trennvorrichtung wurde getestet und erbrachte die folgenden günstigen Ergebnisse, wobei die wenigen Fehlentscheidungen tolerierbar waren.

Spulen 7, 8 unterschiedlichen Durchmessers (von leer bis voll) wurden dem Greifer 15 zugeführt. Die Reaktion des Tasters 17 war bis auf sehr wenige Ausnahmen korrekt. Als Fehler trat nur die Einstufung einer leeren Spule als voll auf und nicht der umgekehrte Fall. Eine leere Spule mit schwarzer Bandklammer wurde immer dann als voll deklariert, wenn die Klammer in Richtung des Tasters 17 zeigte. Auch bei einer leeren, roten Spule wurde aufgrund der relativ dunklen Farbe die falsche Entscheidung getroffen, wohingegen eine leere gelbe Spule mit großem Kerndurchmesser richtig eingestuft wurde. Schwarze Bandklammern und farbige Spulen sind jedoch relativ selten. Der Fall, daß eine halbe Umschlingung mit Magnetband auf der dem Taster gegenüberliegenden Seite zu Fehlern führt, kann aufgrund der Position des Tasters und der Wickelrichtung des Bandes nicht eintreten. Das durchsichtige Vorspannband störte den Erkennungsprozeß nicht.

Der Einsatz der erfindungsgemäßen Trennvorrichtung in einer automatischen Magnetband- oder Film-Kassetten-Demontage-Anlage ist sehr vorteilhaft und begünstigt deren wirtschaftliche Benutzung, insbesondere für Recycling-Anlagen.

Eine Trennvorrichtung für wenigstens einen Gegenstand von einem Gehäuseteil enthält eine Greifvorrichtung, eine Ausstoßeinrichtung und, wenn notwendig, eine Tastvorrichtung zur Erkennung des Gegenstands. Die Trennvorrichtung ist zweckmäßig für Demontage-Anlagen von Kassetten für Audio-, Video-, Daten-, Film-Anwendungen einsetzbar.

## Patentansprüche

1. Trennvorrichtung für wenigstens einen, in einem einseitig offenen Gehäuseteil (5), teilweise über einer Gehäuseöffnung (13), befindlichen Gegenstand (7, 8), insbesondere eine Bandspule, umfassend eine Greifvorrichtung (15) für den Gegenstand, wobei die Trennvorrichtung eine Ausstoßvorrichtung (14) enthält, die durch die Gehäuseöffnung (13) an den Gegenstand herantritt und denselben in den Bereich der Greifvorrichtung (15) bewegt, die den Gegenstand (7, 8) vom Gehäuseteil (5) trennt, dadurch gekennzeichnet, daß eine Detektorvorrichtung (17) vorgesehen ist, die den Zustand des Gegenstands (7, 8) durch Tastsignale kennzeichnet und daß die Greifvorrichtung (15) mit einer Bewegungssteuerungseinrichtung (CO) in Verbindung steht und die Tastsignale von der Detektorvorrichtung (17) der Bewegungssteuerungseinrichtung (CO) zugeführt werden und den Weitertransport des Gegenstands (7, 8) bestimmen.

2. Trennvorrichtung für wenigstens eine Bandspule aus einem Gehäuseteil, nach Anspruch 1, dadurch gekennzeichnet, daß der Zustand, ob eine volle oder leere Bandspule (7, 8) vorliegt, mittels einer Tastvorrichtung (17) als Detektorvorrichtung festgestellt wird.

3. Trennvorrichtung für wenigstens eine Magnetbandspule aus einem Gehäuseteil nach Anspruch 1, dadurch gekennzeichnet, daß der Zustand, ob ein Eisenoxid-Chromdioxid- oder Metall-Schicht-Magnetband vorliegt, mittels einer Tastvorrichtung als Detektorvorrichtung (17) festgestellt wird.

4. Trennvorrichtung nach Anspruch 1 und 3, dadurch gekennzeichnet, daß die Tastvorrichtung direkt an der Greifvorrichtung (15) vorgesehen ist.

## Claims

1. A separating device for at least one component (7, 8), located in a housing part (5) open on one side, partially over a housing opening (13), in particular a tape reel, comprising a gripping device (15) for the component, the separating device including an ejecting device (14), which comes up against the component through the housing opening (13) and moves it into the region of the gripping device (15), which separates the component (7, 8) from the housing part (5), wherein a detector device (17) is provided which identifies the state of the component (7, 8) by means of sensing signals and wherein the gripping device (15) is in connection with a movement-controlling means (CO) and the sensing signals from the detector device (17) are fed to the movement-controlling means (CO) and determine the further transport of the component (7, 8).

2. A separating device for at least one tape reel from a housing part, as claimed in claim 1, wherein the state as to whether a full or empty tape reel (7, 8) is present is established by means of a sensing device (17) as the detector device.

3. A separating device for at least one magnetic tape reel from a housing part as claimed in claim 1, wherein the state as to whether an iron oxide, chromium dioxide or metal coated magnetic tape is present is established by means of a sensing device as the detector device (17).

4. The separating device as claimed in claims 1 and 3, wherein the sensing device is provided directly on the gripping device (15).

## Revendications

1. Dispositif de séparation pour au moins un objet (7,8) se trouvant dans une partie de boîtier (5) ouverte sur un côté, partiellement par une ouverture du boîtier (13), en particulier une bobine de bande, comprenant un dispositif de préhension (15) pour l'objet, le dispositif de séparation contenant un éjecteur (14), qui s'approche de l'objet par l'ouverture du boîtier (13) et amène celui-ci dans la zone du dispositif de préhension (15), qui sépare l'objet (7,8) de la partie de boîtier (5), caractérisé en ce qu'un dispositif de détection (17) est prévu, qui caractérise la position de l'objet (7,8) par des signaux commutateurs, et en ce que le dispositif de préhension (15) est relié à un mécanisme de commande de mouvement (CO) et les signaux commutateurs du dispositif de détection (17) sont amenés au mécanisme de commande de mouvement (CO) et déterminent la poursuite du transport de l'objet (7,8).

2. Dispositif de séparation pour au moins une bobine de bande d'une partie de boîtier suivant la revendication 1, caractérisé en ce que la position, qu'il s'agisse d'une bobine de bande (7,8) vide ou pleine, est établie au moyen d'un dispositif commutateur comme dispositif de détection (17).

3. Dispositif de séparation pour au moins une bobine de bande magnétique d'une partie de boîtier suivant la revendication 1, caractérisé en ce que la position, qu'il s'agisse d'une bande magnétique à couche d'oxyde de fer et de dioxyde de chrome ou à couche métallique, est établie au moyen d'un dispositif commutateur comme dispositif de détection (17).

4. Dispositif de séparation suivant les revendications 1 et 3, caractérisé en ce que le dispositif commutateur est prévu directement sur le dispositif de préhension (15).
